# EUROPEAN PATENT APPLICATION

(11) **EP 1 484 481 A1**
(43) Date of publication of application: **08.12.2004**
(21) Application number: 02700675.8
(22) Date of filing: 21.02.2002
(51) Int. Cl.: F01N 3/02

(54) **EXHAUST EMISSION CONTROL DEVICE AND CASING STRUCTURE OF THE CONTROL DEVICE**

(71) Applicant: IBIDEN CO., LTD., Ogaki-shi Gifu-ken 503-8604 (JP)
(72) Inventor: KOJIMA, Masaaki, Ibiden Co., Ltd., Ibi-gun, Gifu 501-0695 (JP)
(74) Representative: Maiwald Patentanwalts GmbH
(86) International application number: PCT/JP2002/001557
(87) International publication number: WO 2003/071105

(57) **Abstract**

An exhaust gas purifying device includes a tubular casing 21 arranged in exhaust passages 6, 7 of an internal combustion engine. A filter 13 is held in the casing 21. The filter 13 collects and burns particulates contained in the exhaust gas discharged by the internal combustion engine. The casing 21 has a double structure including an inner case 23 supporting an outer peripheral surface of the filter 13 and an outer case 24 arranged around the inner case 23. The inner and outer cases 23, 24 are spaced from each other with a clearance C1 defined between the cases 23, 24.

## Description

### FIELD OF THE INVENTION

The present invention relates to exhaust gas purifying devices for purifying exhaust gas discharged by internal combustion engines including diesel engines and casing structures for the devices.

### BACKGROUND OF THE INVENTION

Conventionally, a number of exhaust gas purifying devices have been proposed. The devices are configured by accommodating a ceramic honeycomb filter for purifying exhaust gas in a metal tubular casing, which is disposed in an exhaust passage of a diesel engine. As the filter is used for a relatively long time, the filter collects soot (diesel particulates) from the exhaust gas. The soot is deposited in the filter and gradually increases the engine load. If this is the case, the filter is heated to the ignition temperature of the soot (600 to 630 degrees Celsius) by a heating means such as a heater or burner. The soot is thus burned and removed such that the filter is regenerated.

However, conventional exhaust gas purifying devices have the following problems.

That is, when the filter is heated by the heating means, the heat is transmitted to a different component (for example, the casing) that is held in contact with the filter. The heat thus escapes to the exterior of the filter, hampering the heating of the filter. This increases the energy needed to heat the filter to the soot ignition temperature and raises costs. Further, if an electric heater is used as the heating means, an increased electric load is applied to the battery, which accelerates the battery consumption.

In addition, a temperature difference is caused between the middle portion of the filter and an outer peripheral portion of the filter. Therefore, if the honeycomb filter is formed of, for example, porous silicon carbide, an increased thermal stress is generated in the filter. In this case, the filter has a tendency to crack, which is damaging to the filter. Moreover, in conventional devices, replacement of the filter is complicated, making it difficult to maintain the devices.

The present invention is for solving the above problems. Accordingly, it is an objective of the invention to provide an exhaust gas purifying device that saves costs by decreasing energy loss and suppressing damage to the filter, as well as a casing structure for the device.

### DISCLOSURE OF THE INVENTION

To solve the above problems, the gist of a first embodiment of the present invention is an exhaust gas purifying device comprising a tubular casing disposed in an exhaust passage of an internal combustion engine and a filter accommodated in the casing for collecting, burning, and removing particulates contained in the exhaust gas discharged by the internal combustion engine. The device is characterized in that the casing has a multiple case structure including an inner case supporting an outer peripheral surface of the filter and at least one outer case arranged around the inner case, and that the inner and outer cases are spaced from each other with a clearance defined between the cases.

The gist of a second embodiment is an exhaust gas purifying device comprising a tubular casing disposed in an exhaust passage of an internal combustion engine and a filter accommodated in the casing for collecting, burning, and removing particulates contained in the exhaust gas discharged by the internal combustion engine. The device is characterized in that the casing has a double structure including an inner case supporting an outer peripheral surface of the filter and an outer case arranged around the inner case, and that the inner and outer cases are spaced from each other with a clearance defined between the cases.

It is desirable that a fluid blocking member is provided at an upstream end portion of the inner case for blocking communication between a space including an upstream end surface of the filter and the clearance.

A fluid blocking member may be provided at a downstream side of the inner case and between the inner case and the outer case for blocking communication between a space including a downstream end surface of the filter and the clearance.

The fluid blocking member may be a flange projecting from an outer peripheral surface of an end of the inner case. The flange may be secured to an outermost component of the outer case in an attachable or detachable manner.

A heater for regenerating the filter may be disposed at an upstream position with respect to the filter. Further, a porous heat reflector may be arranged at a further upstream position with respect to the heater.

The gist of a third embodiment is a casing structure of an exhaust gas purifying device having a multiple structure including an inner case supporting an outer peripheral surface of a filter for collecting, burning, and removing particulates contained in the exhaust gas discharged by an internal combustion engine and at least one outer case arranged around the inner case. The casing structure is characterized in that the inner and outer cases are spaced from each other with a clearance defined between the cases.

In each of the above-described embodiments, the outer peripheral surface of the filter is held in contact with the inner case. However, the clearance is defined between the inner case and the outer case. Therefore, in other words, a heat insulating air layer is ensured between the inner and outer cases. The heat transmission from the inner case to the outer case is thus hampered. This prevents the heat from escaping to the exterior of the filter such that the temperature of the filter is efficiently raised. That is, the exhaust gas purifying device reduces energy loss and thus saves costs. Further, since the heat is prevented from escaping from the outer peripheral portion of the filter, the temperature difference between the middle portion and the outer peripheral portion of the filter hardly occurs. As a result, a relatively large thermal stress, which leads to cracks damaging the filter, is avoided.

If the fluid blocking member is provided at the upstream end portion of the inner case, communication between the space including the upstream end surface of the filter and the clearance is blocked. Therefore, a relatively hot exhaust gas does not flow into the clearance in which the heat insulating air layer is formed. This structure reduces heat energy loss caused by heat transmission from the exhaust gas to the outer case. The costs are thus further saved. Further, the exhaust gas does not bypass the filter or reach the downstream side of the filter without being purified. The purifying efficiency is thus prevented from being lowered.

If the fluid blocking member is provided at the downstream end portion of the inner case, communication between the space including the downstream end surface of the filter and the clearance is blocked. This structure further reduces the heat energy loss caused by the heat transmission from the exhaust gas to the outer case. The costs are thus further saved.

If the fluid blocking member is configured by the flange, the flange serves also as a portion to which the inner case is secured. This avoids an increase in the number of the parts and complication of the structure. Further, the filter may be removed from the outer case in a state accommodated in the inner case. The replacement of the filter thus becomes relatively easy, as compared to a conventional case. As a result, maintenance is facilitated.

If a heater for regenerating the filter and heat reflector are provided, the heat of the heater is reflected by the heat reflector. The heat energy loss of the heater is thus decreased, and the filter is heated efficiently. Further, since the heat reflector is porous, the flow of the exhaust gas to the filter is not hampered.

### BRIEF DESCRIPTION OF THE DRAWINGS

Fig. 1 is a schematic view showing an example of an exhaust gas purifying device according to a first embodiment of the present invention;
Fig. 2 is a cross-sectional view showing the exhaust gas purifying device of Fig. 1;
Fig. 3 is an exploded perspective view showing a casing structure of the exhaust gas purifying device of Fig. 1;
Fig. 4 is an end view showing a filter employed in the exhaust gas purifying device of Fig. 1;
Fig. 5 is a cross-sectional view showing a portion of the filter;
Fig. 6 is a cross-sectional view showing an exhaust gas purifying device of a second embodiment;
Fig. 7 is a cross-sectional view showing an exhaust gas purifying device of a third embodiment;
Fig. 8 is a cross-sectional view showing an exhaust gas purifying device of a fourth embodiment; and
Fig. 9 is a cross-sectional view showing an exhaust gas purifying device of a fifth embodiment.

### BEST MODE FOR CARRYING OUT THE INVENTION

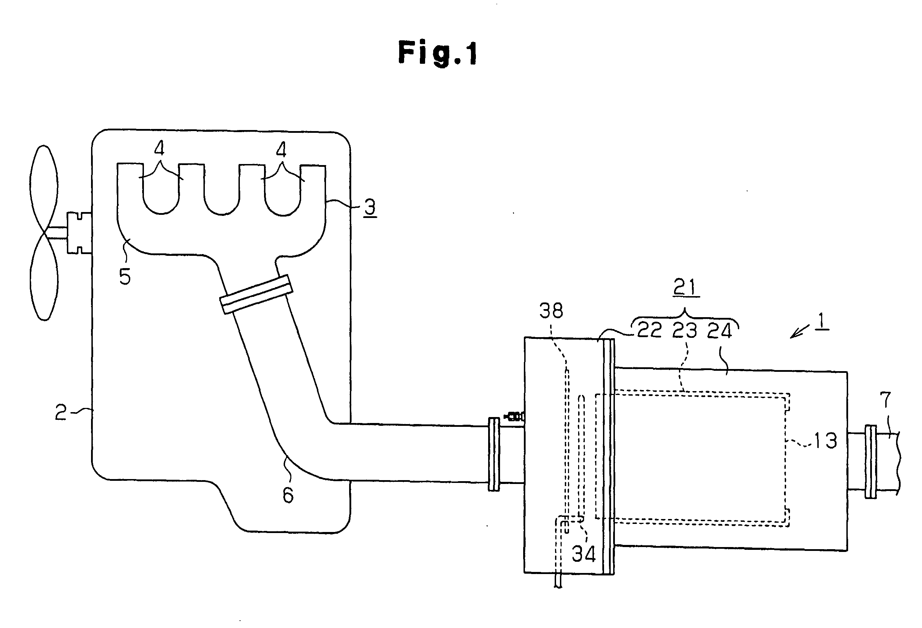

An exhaust gas purifying device 1 according to a first embodiment of the present invention will hereafter be described with reference to Figs. 1 to 5.

As illustrated in Fig. 1, the exhaust gas purifying device 1 purifies exhaust gas discharged by a diesel engine 2, which serves as an internal combustion engine. The diesel engine 2 includes a plurality of non-illustrated cylinders. A branch 4 of a metal exhaust manifold 3 is coupled to each of the cylinders. The branches 4 are connected to a manifold body 5. Thus, the exhaust gas sent from each of the cylinders is concentrated at one point.

A first exhaust pipe 6 and a second exhaust pipe 7, which are formed of metal, are disposed at a downstream side of the exhaust manifold 3. An upstream end of the first exhaust pipe 6 is coupled to the manifold body 5. The exhaust gas purifying device 1 is located between the first exhaust pipe 6 and the second exhaust pipe 7.

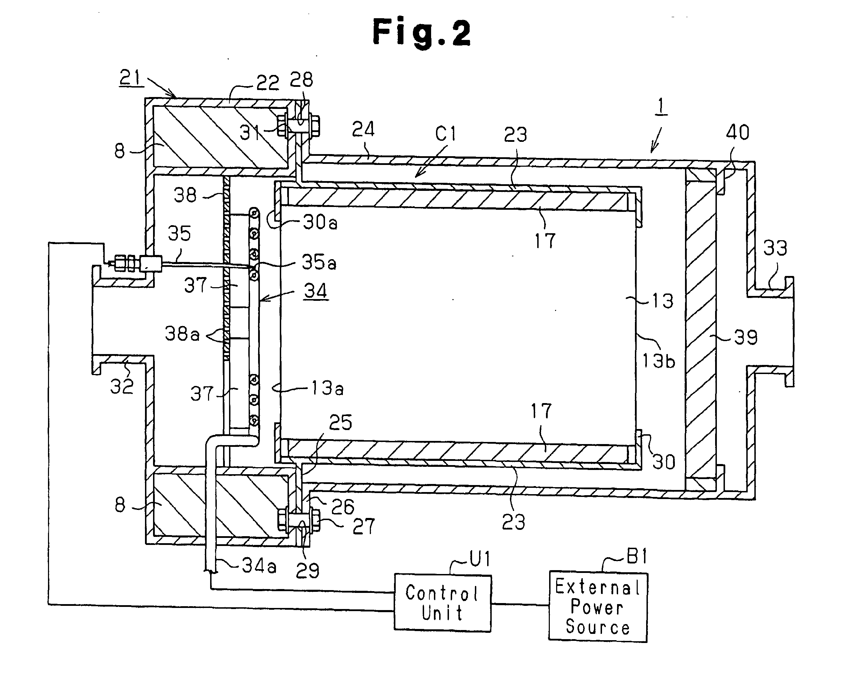

With reference to Fig. 2, the exhaust gas purifying device 1 includes a cylindrical casing 21. An exhaust gas purifying filter 13 is accommodated in the casing 21. The filter 13 will hereafter be explained.

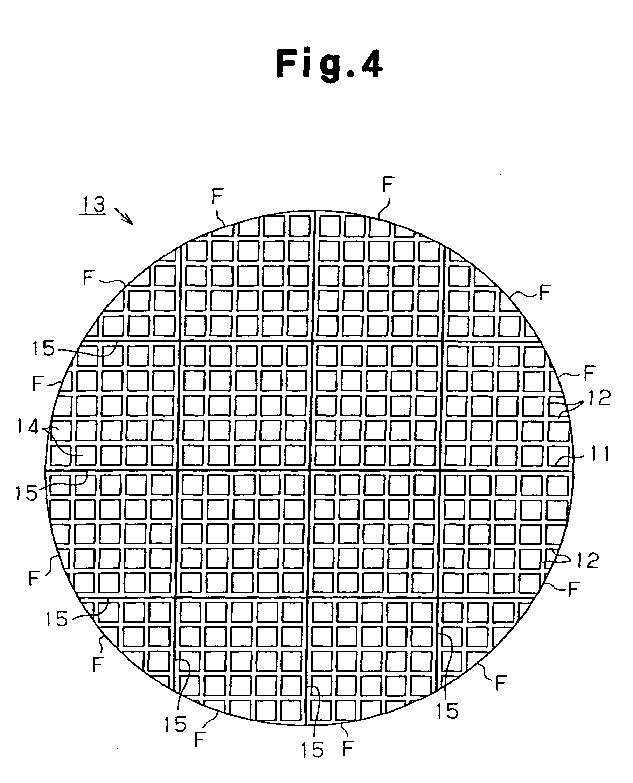

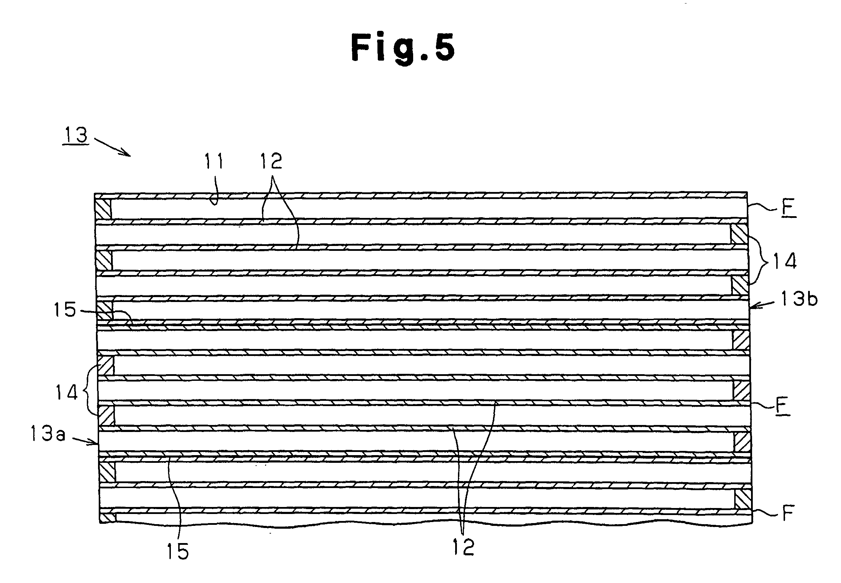

Since the filter 13 is used for removing diesel particulates, the filter 13 is called also as a diesel particulate filter (DPF). The filter 13 of the first embodiment, as shown in Figs. 4 and 5, is formed by bundling a plurality of sintered honeycomb bodies F as one body. The sintered honeycomb bodies F located in the middle portion of the filter 13 are shaped as square rods. A plurality of sintered honeycomb bodies F that are shaped differently, or unlike the square rods, are arranged around the honeycomb bodies F that are shaped as the square rods. Accordingly, the filter 13 as a whole is shaped as a cylinder.

In the first embodiment, each of the sintered honeycomb bodies F is formed from a sintered body of porous silicon carbide (SiC), which is a type of sintered ceramic body. However, other than the sintered body of silicon carbide, a sintered body of silicon nitride or sialon or alumina or cordierite may be selected. A plurality of through holes 11, each of which has a substantially square cross-sectional shape, are formed in each of the sintered honeycomb bodies F and are arranged regularly in an axial direction. The through holes 11 are spaced from one another by cell walls 12. An opening of each through hole 11 is sealed by a plug 14 (in this embodiment, a sintered body of porous silicon carbide) at one of end surfaces 13a, 13b. Each of the end surfaces 13a, 13b as a whole thus presents a diced pattern. As a result, a number of cells each having a square cross-sectional shape are formed in each sintered honeycomb body F. Approximately half of the cells open at the upstream end surface 13a, while the remaining cells open at the downstream end surface 13b.

As shown in Figs. 4 and 5, the sintered honeycomb bodies F are bound together by an adhesive 15 at the outer peripheral surfaces. The adhesive 15 serves to compensate thermal expansion of the sintered honeycomb bodies F. In other words, the adhesive 15 prevents cracks from being caused by thermal stress. In the first embodiment, a heat resistant ceramic adhesive in which ceramic fibers are dispersed is used as the adhesive 15. It is preferred that silicon carbide powders, in addition to the ceramic fibers, are dispersed in the adhesive 15.

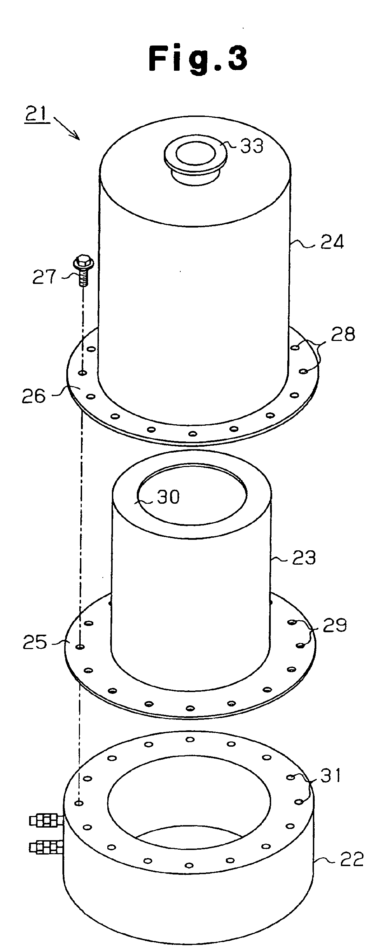

With reference to Figs. 2 and 3, the casing 21, which accommodates the filter 13, is configured by a plurality of metal tubular members. More specifically, in the first embodiment, three members including a heater case 22, an inner case 23, and an outer case 24 (all formed of SUS304) configure the casing 21. The heater case 22, serving as a heating means accommodating case, forms a portion of a heater unit. The inner case 23 forms a portion of a filter unit.

The heater case 22 defines a sealed space for preventing exhaust gas from entering the heater case 22. The heater case 22 thus provides a heat insulating effect. A mat-shaped heat insulating material 8, the main component of which is ceramic fibers, is packed in the space of the heater case 22. This improves the heat insulating effect.

Each of the inner case 23 and the outer case 24 has a cylindrical shape. The inner case 23, which is accommodated in the outer case 22, is smaller than the outer case 24 (the longitudinal dimension and the diameter of the inner case 23 are smaller than those of the outer case 24). Therefore, when the cases are assembled, a clearance C1 having a constant dimension is defined between the outer peripheral surface of the inner case 23 and the inner peripheral surface of the outer case 24, which is arranged around the inner case 23. In the first embodiment, the dimension of the clearance C1 is approximately 1 to 5 millimeters. A flange 25 of the inner case 23 serves also as a fluid blocking member that blocks communication between the space including the upstream end surface 13a of the filter 13 and the clearance C1.

The flange 25 projects from the outer peripheral surface of an upstream end portion of the inner case 23. In the same manner, a flange 26 projects from the outer peripheral surface of an upstream end portion of the outer case 24. The flanges 25, 26 are designed to define equal outer diameters. A plurality of bolt holes 28 are formed in the flange 25 and are spaced from adjacent ones at certain intervals. In the same manner, a plurality of bolt holes 29 are formed in the flange 26 and are spaced from adjacent ones at certain intervals. Attachment bolts 27 are passed through the bolt holes 28, 29. The bolt holes 29 of the flange 25 are located at positions corresponding to the bolt holes 28 of the flange 26. In the same manner, a plurality of bolt holes 31 are formed in a downstream end surface of the heater case 22 at positions corresponding to the bolt holes 28, 29. Thus, if the bolts 27 are passed through the corresponding bolt holes 28, 29, 31 and fastened as such, the cases 22, 23, 24 are fixed to each other to form one body, or the casing 21. If the bolts 27 are removed from the bolt holes 28, 29, 31, the casing 21 is separated into three parts. In other words, it may be understood that the flange 25 of the inner case 23 is secured to the flange 26 of the outer case 24 in an attachable or detachable manner.

The mat-shaped heat insulating material 17 containing ceramic fibers is wrapped around the filter 13. In this state, the filter 13 is held in the inner case 23. That is, the inner case 23 supports the outer peripheral surface of the filter 13 through the heat insulating material 17. A filter support 30 projects from the inner peripheral surface of the downstream end of the inner case 23 and extends along the entire circumference. The filter support 30 is abutted by an outer peripheral portion of the downstream end surface 13b of the filter 13. This structure prevents the filter 13 from falling from the inner case 23 to the downstream side.

A support piece 30a is attached to the inner peripheral surface of the upstream end portion of the inner case 23 and extends along the entire circumference. The support piece 30a is abutted by an outer peripheral portion of the upstream end surface 13a of the filter 13. This structure prevents the filter 13 from falling from the inner case 23 to the upstream side. Further, the heat insulating material 17 is prevented from being displaced. A plurality of support pieces 30a may be deployed as spaced from adjacent ones at predetermined angular intervals.

A coupling portion 32 projects from a middle portion of the upstream end surface of the heater case 22 and is coupled with a downstream end of the first exhaust pipe 6. Further, a coupling portion 33 projects from a middle portion of the downstream end surface of the outer case 24 and is coupled with an upstream end of the second exhaust pipe 7.

As illustrated in Figs. 1 and 2, the heater case 22, a component of the casing 21, accommodates a heater 34 and a temperature detector 35. The heater 34 serves as an electric heating means for regenerating the filter and is located at an upstream position with respect to the filter 13. In the first embodiment, an AC heater is used as the heater 34. The heater 34 is formed by winding a cable spirally. More specifically, the cable includes a conductive core of a nichrome wire covered by a sheath of magnesia, which presents improved insulating performance.

The heater 34 is opposed to the upstream end surface 13a of the filter 13 and is spaced from the upstream end surface 13a at a certain interval. Two end portions 34a of the heater 34 extend through an outer peripheral portion of the heater case 22 to the exterior of the casing 21. The core projecting from each of the end portions 34a of the heater 34 is electrically connected to a connector through a glass tube. The connector, as shown in Fig. 1, is electrically connected to a driver circuit of a control unit U1 controlling the regenerating operation of the filter 13. Thus, when necessary, the control unit U1 operates to supply power to the heater 34 from an external power source B1. This enables the heater 34 to generate heat from the entire portion such that the temperature rises to 800 to 900 degrees Celsius.

With reference to Fig. 2, a punching plate 38 serving as a porous heat reflector is disposed at an upstream position with respect to the heater 34. The punching plate 38 is a disk-shaped plate member and is formed of stainless steel (SUS304) in the first embodiment. The outer periphery of the punching plate 38 is bonded with the inner peripheral surface of the heater case 22 through, for example, welding. The punching plate 38 is thus secured to the heater case 22. Further, the heater 34 is fixed to the punching plate 38 by a fixing tool 37.

A number of through holes 38a extend through the punching plate 38. The through holes 38a are arranged regularly to cover substantially the entire area of the punching plate 38. Therefore, after being discharged from the first exhaust pipe 6, exhaust gas passes through the through holes 38a to reach the filter 13. Further, the punching plate 38 reflects the heat generated by the heater 34, preventing the heat from being released to the exterior. In other words, the heat reflected by the punching plate 38 is supplied to the filter 13 as radiation heat. The filter 13 is thus efficiently heated.

A ceramic foam reflector 39 serving as another porous heat reflector is disposed at the downstream side of the filter 13, as illustrated in Fig. 2. In the first embodiment, the ceramic foam reflector 39 is supported by a heat reflector support 40, which projects from the inner peripheral surface of the outer case 24 and extends along the entire circumference. The ceramic foam reflector 39 is a porous body formed of aluminum nitride or the like and presents fluid permeability and heat insulating properties. Therefore, like the upstream side of the filter 13, a heat insulating effect is ensured at the downstream side of the filter 13.

With reference to Fig. 2, the temperature detector 35 is deployed in the vicinity of the heater 34. The temperature detector 35 is a rod-shaped body, and a temperature detecting portion 35a is formed at a distal end of the temperature detector 35. The temperature detector 35 of this embodiment includes a sheath thermocouple covered by a protecting pipe formed of stainless steel or the like. The temperature detecting portion 35a is exposed from a distal end of the covered sheath thermocouple. The temperature detecting portion 35a is placed in the space defined by the cable spirally wound in the heater 34. The temperature detector 35 is electrically connected to the control unit U1.

The operation of the exhaust gas purifying device 1 configured as described above will hereafter be explained.

The casing 21 accommodating the filter 13 is deployed in the exhaust gas passage, or between the first exhaust pipe 6 and the second exhaust pipe 7. In this state, if the engine 2 is started, exhaust gas is sent to the interior of the casing 21. That is, after being discharged from the first exhaust pipe 6, the exhaust gas flows first into the cells opening at the upstream end surface 13a of the filter 13. The gas then permeates the cell walls 12 and reaches the adjacent cells, which open at the downstream end surface 13b of the filter 13. Further, through the openings of the cells, the exhaust gas is discharged from the downstream end surface 13b of the filter 13.

However, the soot contained in the exhaust gas is not permitted to permeate the cell walls 12 and is trapped in the cells. As a result, the exhaust gas is purified before being discharged from the downstream end surface 13b of the filter 13. The purified gas further flows in the second exhaust pipe 7 and is eventually released to the atmosphere. Afterwards, the heater 34 is powered to heat the filter 13 and supporting air is supplied such that the soot is burned and removed. More specifically, the soot in the vicinity of the upstream end surface 13a of the filter 13 starts to burn. Burning of the soot is gradually spread to the downstream end surface 13b. By maintaining the soot burning for a certain time period, the filter 13 is regenerated.

Accordingly, the first embodiment has the following effects.
(1) The casing 21 of the first embodiment has a double structure formed by the inner case 23 and the outer case 24. The inner case 23 supports the outer peripheral surface of the filter 13. The outer case 24 is arranged around the inner case 23. Further, the cases 23, 24 are spaced from each other at an interval corresponding to the clearance C1.
   Although the outer peripheral surface of the filter 13 is held in contact with the inner case 23, the clearance C1 is ensured between the inner case 23 and the outer case 24. In other words, a heat insulating air layer is formed between the cases 23, 24. The heat insulting air layer presents relatively low heat conductivity as compared to metal and hampers the heat transmission from the inner case 23 to the outer case 24. Further, air convection does not occur readily in the clearance C1. This structure stops heat from escaping to the exterior of the filter 13. The temperature of the filter 13 is thus efficiently raised. In other words, the exhaust gas purifying device 1 has decreased energy loss and thus saves costs. In addition, since the heat energy applied to the filter 13 is also decreased, the power supplied to the heater 34 is reduced and the time required for regenerating the filter 13 is shortened.
(2) The casing structure of the first embodiment prevents heat from escaping from the outer peripheral portion of the filter 13. Thus, a temperature difference is hardly caused between the middle portion of the filter 13 and the outer peripheral portion of the filter 13. This avoids generation of relatively large thermal stress, which leads to cracks damaging the filter 13. Therefore, the exhaust gas purifying device 1 presents improved strength and has relatively high reliability.
(3) Since the casing structure of the first embodiment stops heat from escaping from the outer peripheral portion of the filter 13, the temperature of the outer peripheral surface of the outer case 24 is reliably lowered. Therefore, the components attached to the outer surface of the outer case 24 and those disposed around the outer case 24, for example, do not necessarily have to have high heat resisting performance, as compared to conventional counterparts.
(4) In the casing structure of the first embodiment, the flange 25 serving as the fluid blocking member, which is formed at the upstream end portion of the inner case 23, blocks communication between the space including the upstream end surface of the filter 13 and the clearance C1. Thus, relatively hot exhaust gas does not flow into the clearance C1 in which the heat insulating air layer is located. This prevents the heat from the exhaust gas from being transmitted to the outer case 24, reducing the heat energy loss otherwise caused by such heat transmission. The costs are thus further saved. In addition, the exhaust gas does not bypass the filter 13 or reach the downstream side without being purified. This structure prevents the purifying efficiency from being lowered.
(5) In the casing structure of the first embodiment, the flange 25 serving as the fluid blocking member also functions as a portion to which the inner case 23 is fixed. This structure avoids an increase in the number of the parts and complication of the configuration.
   Further, this structure allows the filter 13 to be removed from the outer case 24 in a state accommodated in the inner case 23. It is thus possible to easily replace the filter 13, as compared to a conventional case. Also, a major portion of the downstream end surface 13b of the filter 13 is exposed from the inner case 23. This makes it relatively easy to clean ashes after the filter 13 is removed from the casing 21. In this manner, the casing structure of this embodiment facilitates the maintenance.
(6) In the casing structure of the first embodiment, the punching plate 38 serving as the heat reflector reflects the heat of the heater 34. Further, the heat of the filter 13, which is heated by the heater 34, is reflected by the ceramic foam reflector 39 also serving as the heat reflector. The heat energy loss of the heater 34 is thus decreased such that the filter 13 is efficiently heated. This structure contributes to shortening of the time required for regenerating the filter 13. In addition, since the heat reflectors are porous, the exhaust gas flow to and from the filter 13 is not hampered.
(7) In the first embodiment, the outer peripheral portion of the upstream end surface 13a of the filter 13 is held in contact with the filter support piece 30a formed at the upstream end portion of the inner case 23. This structure prevents the heat insulating material 17 from being corroded. Further, when the filter 13 is removed from the casing 21 and is washed in water for cleaning ashes, the heat insulating material 17 is stopped from being displaced.

Other embodiments of the present invention will hereafter be described.

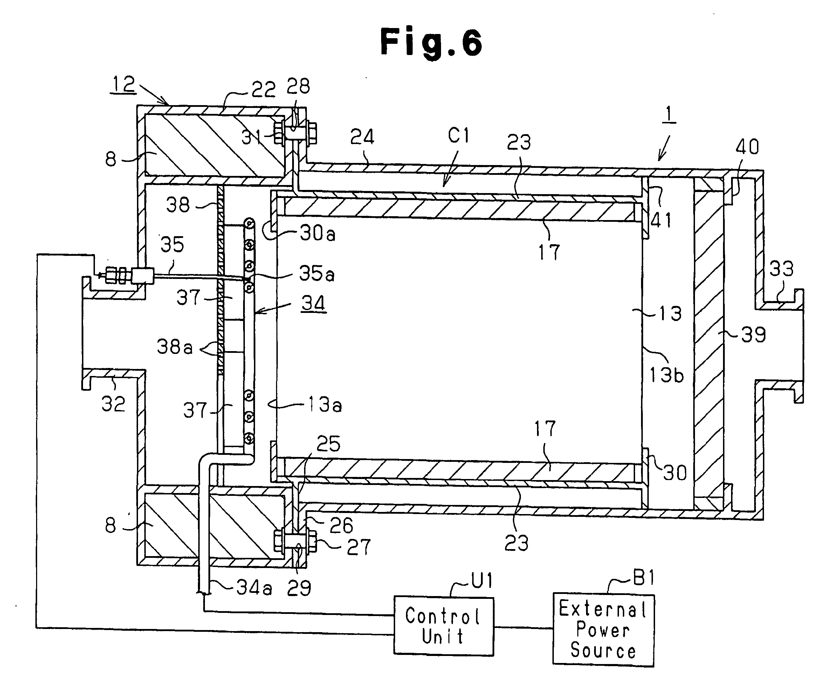

In a second embodiment illustrated in Fig. 6, a flange 41 projects from the outer peripheral surface of the downstream end portion of the inner case 23 and extends along the entire circumference. In this embodiment, the flange 41 serving as a fluid blocking member blocks communication between the space including the downstream end surface 13b of the filter 13 and the clearance C1. This structure further reduces the heat energy loss caused by the heat transmission from the exhaust gas to the outer case 24, as compared to the first embodiment. This effect is brought about by the fact that a heat insulating air layer more preferable than that of the first embodiment is formed in the clearance C1. Therefore, costs are further saved. In addition, the filter 13 is further securely fixed as long as the outer periphery of the flange 41 is held in contact with the inner peripheral surface of the outer case 24, as shown in Fig. 6.

Further, it is desirable that a clearance is defined between the flange 41 and the inner peripheral surface of the outer case 24. The clearance makes it possible to remove the inner case 23 smoothly from the outer case 24, even if the dimensions of the inner case 23 are changed due to thermal expansion.

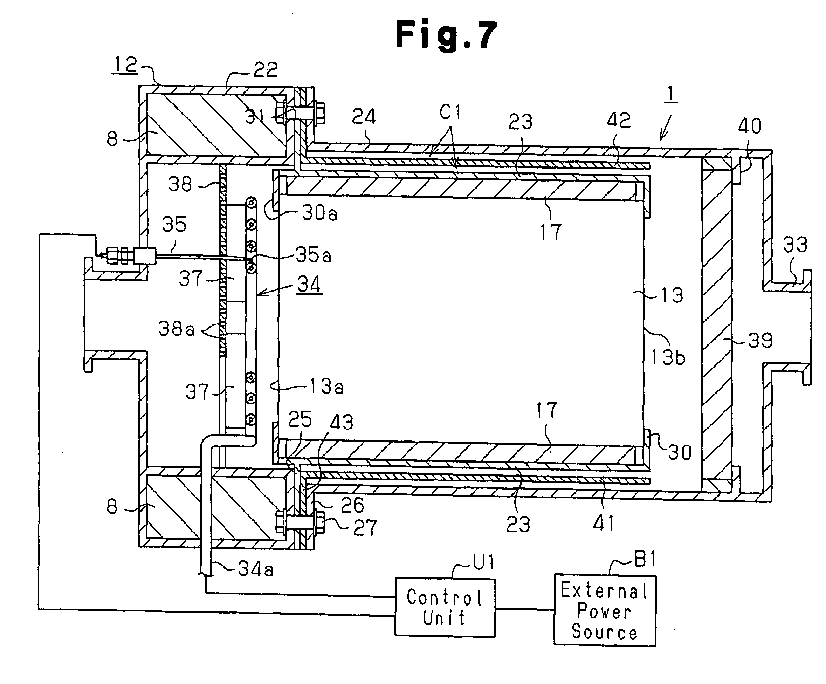

In a third embodiment illustrated in Fig. 7, the casing 21 includes an additional outer case 42, other than the outer case 24. The casing 21 thus has a triple structure. The additional outer case 42 is arranged between the outer case 24 and the inner case 23. This structure has two clearances C1, each of which serves as a heat insulating air layer. Further, a flange 43 projects from the outer peripheral surface of the upstream end portion of the outer case 42. The flange 43 is deployed as clamped between the flanges 25, 26.

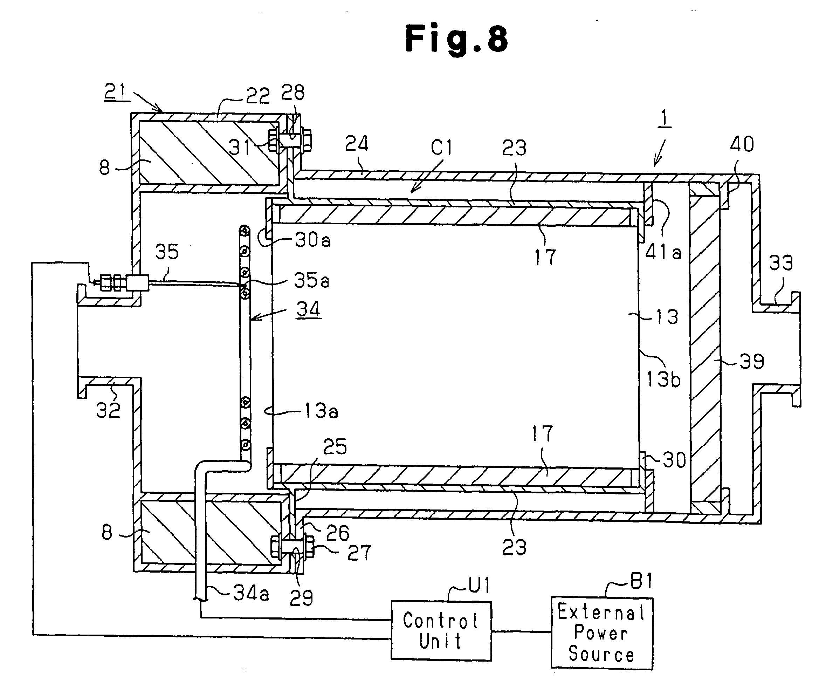

In a fourth embodiment illustrated in Fig. 8, a flange 41a serving as a fluid blocking member projects from the inner peripheral surface of the outer case 24. The flange 41a is engaged with the filter support 30 of the inner case 23. The communication between the space including the downstream end surface 13b of the filter 13 and the clearance C1 is blocked by the flange 41a. This structure further reduces the heat energy loss caused by the heat transmission from the exhaust gas to the outer case 24, as compared to a comparative example (which will be described later).

Also, the fourth embodiment is not provided with the punching plate 38 such that the configuration becomes simple.

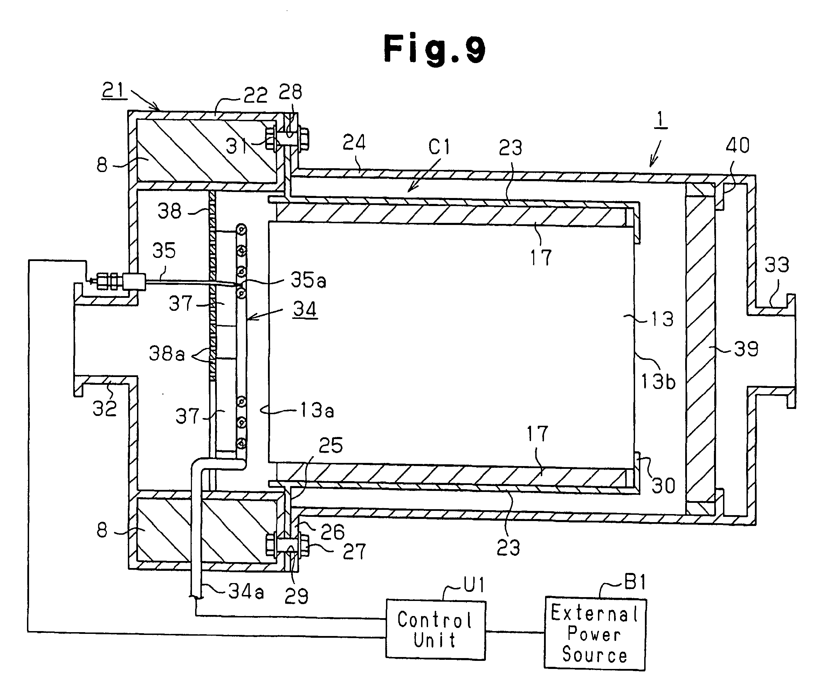

In a fifth embodiment illustrated in Fig. 9, the support piece 30a, which is otherwise formed at the upstream end portion of the inner case 23, is not provided, as is clear from comparison with the first embodiment. The fifth embodiment thus has the operational effects of the first embodiment, except for that of the support piece 30a.

The exhaust gas purifying devices of the illustrated embodiments were subjected to an operational test. One cycle of the test was defined by sending exhaust gas to each of the devices, heating the filter by the heater, and supplying supporting air for burning the soot. The test included ten cycles. The test results are shown in Table 1. The longitudinal dimension of the filter 13 was 150 millimeters.

**Table 1**

| Embodiment | Drawing | Upstream Blocker | Downstream Blocker | Structure | Support Piece | Punching Plate | Temperature Difference (C°) | Crack | Insulator Corrosion Size |
|---|---|---|---|---|---|---|---|---|---|
| 1 | Fig. 2 | Formed | None | Double | Formed | Formed | 30 | None | 0 |
| 2 | Fig. 6 | Formed | Formed | Double | Formed | Formed | 20 | None | 0 |
| 3 | Fig. 7 | Formed | None | Triple | Formed | Formed | 26 | None | 0 |
| 4 | Fig. 8 | Formed | Formed | Double | Formed | None | 40 | None | 0 |
| 5 | Fig. 9 | Formed | None | Double | None | Formed | 30 | None | 15 |
| Comparative | - | None | None | Single | None | None | 150 | Detected | 15 |

In Table 1, the temperature difference indicates the temperature difference between the middle portion and the outer peripheral portion of the filter 13. The insulator corrosion size indicates the size of the portion of the heat insulating material lost due to corrosion in the test. Detection of cracks was conducted visually after the test was completed. A purifying device prepared as the comparative example did not include any of the inner case, the upstream blocking member, the downstream blocking member, the support piece, and the punching plate. This purifying device was also subjected to the operational test.

As indicated clearly in Table 1, in the comparative example, the temperature difference between the middle portion and the outer peripheral portion of the filter was enlarged, causing cracks. In contrast, the temperature difference was relatively small in the first to fifth embodiments. Therefore, no crack was detected, and the durability was improved.

Further, as is clear from comparison among the comparative example, the first embodiment, and the fifth embodiment, the support piece 30a operated efficiently for preventing the heat insulating material from being corroded.

The present invention is not restricted to the illustrated embodiments but may be embodied in the following forms.

In the illustrated embodiments, the punching plate 38 and the ceramic foam reflector 39 are employed as the porous heat reflectors. However, the heat reflectors are not limited to those of the embodiments but may be, for example, a body formed of metal meshes or ceramic fibers.

The ceramic foam reflector 39, which is provided at the downstream side of the filter 13, may be replaced by the punching plate 38. Further, the ceramic foam reflector 39 may be omitted. In this manner, the number of the components of the exhaust gas purifying device 1 is decreased.

The heater 34 does not necessarily have to be an AC heater but may be, for example, a DC heater. Further, the electric heating means such as the electric heater may be replaced by a non-electric heating means such as a burner.

The fluid blocking member does not necessarily have to be the flange 25, which projects from the outer peripheral surface of the end of the inner case 23. The fluid blocking member may be a different structure provided separately from the inner case 23.

The flange 25 may be fixed to the outer case 24, which is the outermost layer, through, for example, welding, such that the flange 25 is prohibited from being attached to or detached from the outer case 24.

## Claims

1. An exhaust gas purifying device comprising a tubular casing disposed in an exhaust passage of an internal combustion engine and a filter accommodated in the casing for collecting, burning, and removing particulates contained in the exhaust gas discharged by the internal combustion engine, the device being **characterized in that**:
the casing has a multiple structure including an inner case supporting an outer peripheral surface of the filter and at least one outer case arranged around the inner case, and the inner and outer cases are spaced from each other with a clearance defined between the cases.

2. An exhaust gas purifying device.comprising a tubular casing disposed in an exhaust passage of an internal combustion engine and a filter accommodated in the casing for collecting, burning, and removing particulates contained in the exhaust gas discharged by the internal combustion engine, the device being **characterized in that**:
the casing has a double structure including an inner case supporting an outer peripheral surface of the filter and an outer case arranged around the inner case, and the inner and outer cases are spaced from each other with a clearance defined between the cases.

3. The exhaust gas purifying device according to Claims 1 or 2, **characterized in that** a fluid blocking member is formed at an upstream end portion of the inner case for blocking communication between a space including an upstream end surface of the filter and the clearance.

4. The exhaust gas purifying device according to any one of Claims 1 to 3, **characterized in that** a support piece is provided at an upstream side of the inner case.

5. The exhaust gas purifying device according to Claim 3, **characterized in that** a fluid blocking member is provided at a downstream side of the inner case and between the inner case and the outer case for blocking communication between a space including a downstream end surface of the filter and the clearance.

6. The exhaust gas purifying device according to any one of Claims 3 to 5, **characterized in that** the fluid blocking member is a flange projecting from an outer peripheral surface of an end of the inner case, and the flange is secured to an outermost component of the outer case in an attachable or detachable manner.

7. The exhaust gas purifying device according to any one of Claims 1 to 6, **characterized in that** a heater for regenerating the filter is disposed at an upstream position with respect to the filter, and a porous heat reflector is arranged at a further upstream position with respect to the heater.

8. A casing structure of an exhaust gas purifying device having a multiple structure including an inner case supporting an outer peripheral surface of a filter for collecting, burning, and removing particulates contained in the exhaust gas discharged by an internal combustion engine and at least one outer case arranged around the inner case, the casing structure being **characterized in that** the inner and outer cases are spaced from each other with a clearance defined between the cases.

9. The exhaust gas purifying device according to any one of Claims 1 to 7, **characterized in that** the filter is a ceramic filter.

10. The exhaust gas purifying device according to any one of Claims 1 to 7, **characterized in that** the filter is a sintered honeycomb body formed of porous silicon carbide.

11. The exhaust gas purifying device according to any one of Claims 1 to 7, **characterized in that** the filter is an integral body formed by bundling a plurality of prism-shaped sintered honeycomb bodies formed of porous silicon carbide and binding the bundled bodies with an adhesive agent.

12. A casing structure of an exhaust gas purifying device having a multiple structure including an inner case supporting an outer peripheral surface of a filter for collecting, burning, and removing particulates contained in the exhaust gas discharged by an internal combustion engine, at least one outer case arranged around the inner case, and a heating means accommodating case accommodating a heating means and arranged at an upstream side of the outer case, the casing structure being **characterized in that** the inner and outer cases are spaced from each other with a clearance defined between the cases.
